## Europäisches Patentamt

(19) **European Patent Office**

**Office européen des brevets**

(11) Veröffentlichungsnummer: **0 060 513**
**B1**

(12) # EUROPÄISCHE PATENTSCHRIFT

(45) Veröffentlichungstag der Patentschrift:
31.07.85

(51) Int. Cl.⁴: **F 16 L 33/22, F 16 L 33/01**

(21) Anmeldenummer: **82101930.4**

(22) Anmeldetag: **11.03.82**

(54) **Brauseschlauch.**

(30) Priorität: **12.03.81 DE 3109359**

(43) Veröffentlichungstag der Anmeldung:
**22.09.82 Patentblatt 82/38**

(45) Bekanntmachung des Hinweises auf die Patenterteilung:
**31.07.85 Patentblatt 85/31**

(84) Benannte Vertragsstaaten:
**AT BE DE FR GB IT NL**

(56) Entgegenhaltungen:
**CH - A - 367 670**
**DE - A - 2 654 377**
**DE - U - 7 600 734**
**GB - A - 687 497**

(73) Patentinhaber: **Hans Grohe GmbH & Co. KG,
Auestrasse 9, D-7622 Schiltach (DE)**

(72) Erfinder: **Buzzi, Günther, Häberlesberg 1,
D-7622 Schiltach (DE)**

(74) Vertreter: **Patentanwälte Ruff und Beier,
Neckarstrasse 50, D-7000 Stuttgart 1 (DE)**

BUNDESDRUCKEREI BERLIN

**Beschreibung**

Die Erfindung betrifft einen Brauseschlauch mit einem axial verlaufende Verstärkungsfäden aufweisenden Innenschlauch und einem Außenschlauch, einer zwischen dem Außenschlauch und dem Innenschlauch angeordneten Verstärkungswendel sowie wenigstens einem· Anschlußnippel, der zwei konzentrische im Querschnitt jeweils im wesentlichen kreisförmige Hülsen aufweist, zwischen denen ein Schlauchende eingeklemmt ist.

Bei einem beispielsweise aus dem deutschen Gebrauchsmuster DE-U-7 600 734 bekannten Schlauch ist zur Befestigung des Anschlußnippels am Schlauch eine gesonderte, doppelwandige und formelastische Dichtmanschette vorgesehen, die vor dem Aufweiten der inneren Nippelhülse, also vor dem Verpressen der beiden Nippelhülsen über das freie Schlauchende zu schieben ist. Diese Art der Nippelbefestigung hat sich bewährt, ist jedoch wegen der gesonderten Dichtmanschette relativ aufwendig. Außerdem sorgt diese Dichtmanschette nicht in jedem Fall für eine hundertprozentige Abdichtung zwischen dem Innenschlauch und dem Außenschlauch. In dem Fall nämlich, daß zwischen dem Innenschlauch und dem Außenschlauch eine Verstärkungswendel vorgesehen ist, bilden sich zwischen diesen beiden Schläuchen wendelförmige Hohlräume, die Zonen eines verringerten Anpreßdruckes zur Folge haben und bedingen, daß unter besonderen Umständen, beispielsweise sehr heißes Wasser, Feuchtigkeit entlang der Dichtflächen kriechen und am abgeschnittenen Schlauchende unter die Dichtmanschette in die Öffnung des wendelförmigen Hohlraumes gelangen kann. Ist dies geschehen, so bildet sich im Zwischenraum zwischen Außen- und Innenschlauch entlang des gesamten Schlauches ein Feuchtigkeitsschleier aus, der dem gesamten Schlauch ein mattes, unschönes Aussehen gibt.

Bei dem aus der GB-A-687 497 bekannten Schlauch ist das Verstärkungsmaterial dicht zwischen die beiden Lagen des Schlauches eingebettet, wobei die innere Schlauchlage über die äußere Schlauchlage hervorsteht und über ein Nippelhülsenteil umgelegt ist. Hierdurch wird lediglich eine Erhöhung der Zugfestigkeit erreicht, nicht aber eine besondere Abdichtung. Wasser könnte bei diesem Schlauch ohne weiteres in Schlauchhohlräume gelangen, wenn solche wie bei dem Schlauch der eingangs beschriebenen Art vorhanden wären.

Der Erfindung liegt die Aufgabe zugrunde, einen Schlauch der eingangs beschriebenen Art hinsichtlich der Nippelbefestigung so zu verbessern, daß in den Innenraum zwischen dem Innenschlauch und dem Außenschlauch kein Wasser eindringen kann, das dem gesamten Schlauch ein mattes, unschönes Aussehen geben könnte.

Diese Aufgabe wird erfindungsgemäß durch einen Brauseschlauch der eingangs beschriebenen Art gelöst, bei dem der Innenschlauch und die Verstärkungsfäden im anschlußseitigen Nippelbereich länger gehalten sind als der Außenschlauch und die Verstärkungswendel und die über die Verstärkungswendel und den Außenschlauch vorstehenden Bereiche des Innenschlauches und der Verstärkungsfäden nach außen um 180° umgeschlagen und die beiden Hülsen unter Abdichtung zwischen dem umgeschlagenen Innenschlauch und dem Außenschlauch gegeneinander verpreßt sind, wodurch eine gesonderte Dichtmanschette entbehrlich wird und dennoch eine einwandfreie Abdichtung zwischen dem Innenschlauch und dem Außenschlauch gewährleistet ist.

Beim erfindungsgemäßen Schlauch kann der Innenschlauch vorzugsweise aus Gummi, es kann jedoch auch ein weicher Kunststoffschlauch verwendet werden.

Die Länge des umgeschlagenen Endes des Innenschlauches entspricht jeweils mindestens einem Viertel, vorzugsweise einem Drittel bis einer Hälfte der Nippellänge.

Weitere Einzelheiten, Merkmale und Vorteile der Erfindung ergeben sich aus der nachfolgenden Beschreibung einer bevorzugten Ausführungsform des erfindungsgemäßen Schlauches und den Ansprüchen im Zusammenhang mit der Zeichnung. In der Zeichnung zeigt jeweils schematisch

Fig. 1 ein Ende eines erfindungsgemäßen Schlauches im Schnitt und

Fig. 2—4 verschiedene Herstellungsstadien des in Fig. 1 dargestellten Schlauchendes.

Bei dem dargestellten Schlauchende 1 handelt es sich um das Ende eines Brauseschlauches mit einem Innenschlauch 2, axial verlaufenden Verstärkungsfäden 3, einer Verstärkungswendel 4 und einem Außenschlauch 5.

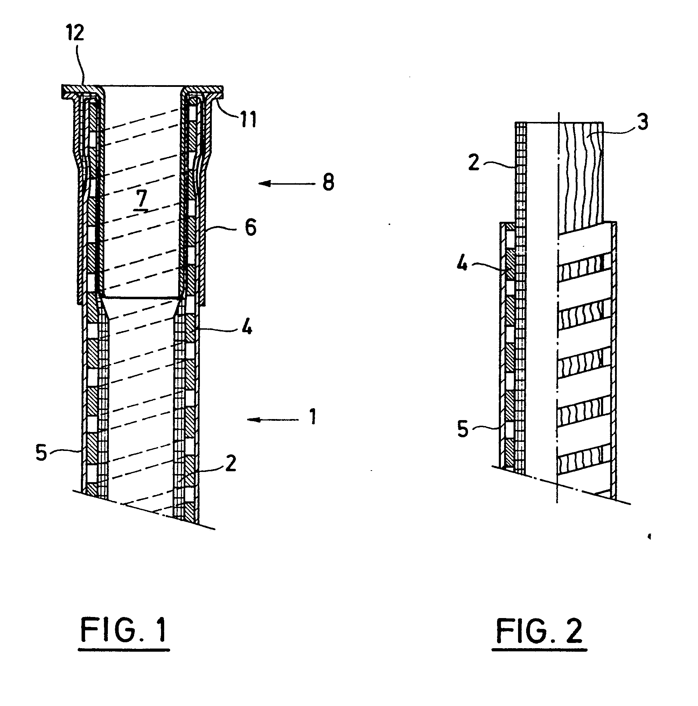

. Das in Fig. 1 nach oben weisende Ende dieses Brauseschlauches ist mit einem aus zwei konzentrisch zueinander angeordneten Hülsen 6, 7 bestehenden Anschlußnippel 8 versehen. Im anschlußseitigen, in Fig. 1 nach oben weisenden Bereich des Anschlußnippels 8 sind der Innenschlauch 2 und die ihn umgebenden Verstärkungsfäden 3 jeweils länger als die Verstärkungswendel 4 und der diese umgebende Außenschlauch 5 und gemeinsam in einer Länge nach außen umgebogen, die etwa einem Drittel der Gesamtlänge des Anschlußnippels 8 entspricht.

Zur Befestigung des Anschlußnippels 8 am freien Ende des Schlauches 1 kann folgendermaßen vorgegangen werden:

Zunächst sind am freien Schlauchende der Außenschlauch 5 und die Verstärkungswendel 4 in einer Länge, die etwa einem Drittel der Gesamtlänge des Anschlußnippels 8 entspricht abzutrennen, was beispielsweise unter Zuhilfenahme eines Messers erfolgen kann. Der Innenschlauch 2 und die ihn umgebenden, jeweils im wesentlichen axial verlaufenden Verstärkungsfäden 3 behalten ihre ursprüngliche Länge (vgl.

Fig. 2).

Über das so vorbereitete freie Schlauchende wird sodann die äußere Hülse 6 des Anschlußnippels 5 geschoben. Diese Hülse 6 weist zwei im Innendurchmesser voneinander abweichende, über eine trichterförmige Erweiterung ineinander übergehende Bereiche bzw. Abschnitte 9, 10 auf, nämlich einen in der Zeichnung nach unten weisenden Abschnitt 9, der im Innendurchmesser im wesentlichen dem Außendurchmesser des Außenschlauches 5 entspricht, und einen in der Zeichnung nach oben weisenden, im Innendurchmesser größeren Abschnitt 10. Der Abschnitt 10 der äußeren Hülse 6 weist an seinem freien Ende einen nach außen ragenden Bund 11 auf, der in seinem Außendurchmesser im wesentlichen dem Außendurchmesser eines Bundes 12 entspricht, der an dem in der Zeichnung nach oben weisenden Ende der inneren Hülse 7 des Anschlußnippels 8 vorgesehen ist.

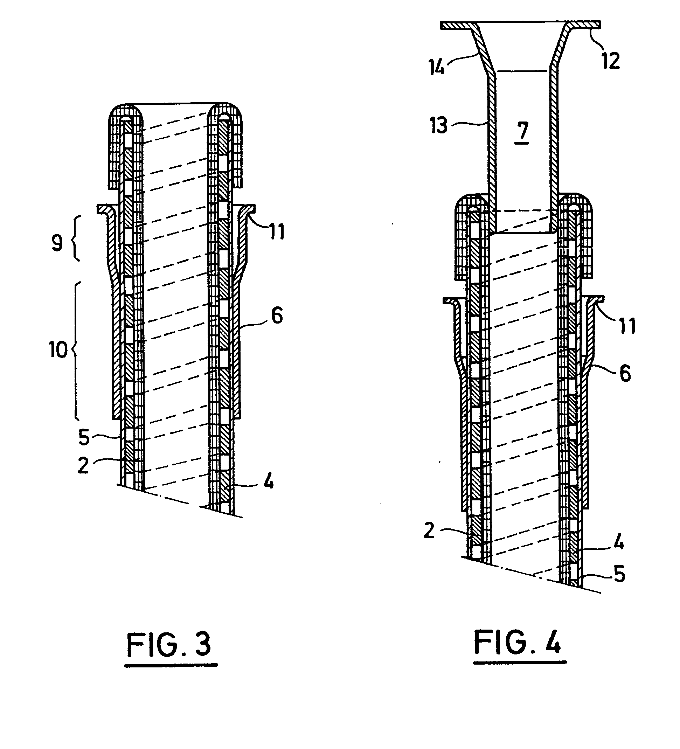

Ist die äußere Hülse 6 des Anschlußnippels 8 etwa so weit aufgeschoben, wie dies in Fig. 3 dargestellt ist, so werden die über die Verstärkungswendel 4 und den Außenschlauch 5 vorstehenden Bereiche des Innenschlauches 2 und der diesen umgebenden Verstärkungsfäden 3 nach außen umgeschlagen. Die Länge des nach außen umgeschlagenen Bereiches entspricht im wesentlichen der Länge des vorerwähnten Abschnittes 9 der äußeren Nippel-Hülse 6.

Ist das Umschlagen des Innenschlauches 2 und der Verstärkungsfäden 3 erfolgt, so wird die äußere Hülse 6 des Anschlußnippels zum freien Schlauchende hin verschoben. Gleichzeitig oder später wird das vom Bund 12 abgewandte Ende der inneren Hülse 7 in das freie Schlauchende gesteckt (vgl. Fig. 4). Der sich an das Einsteckende der inneren Hülse 7 anschließende Hülsenabschnitt 13 weist vor der Verpressung der beiden Hülsen 6, 7 einen Außendurchmesser auf, der im wesentlichen dem Innendurchmesser des Innenschlauches 2 entspricht, so daß das Einschieben der inneren Hülse keine Schwierigkeiten bereitet. An den zylindrischen Abschnitt der inneren Hülse 7 schließt sich in der Zeichnung nach oben ein sich trichterförmig erweiternder Abschnitt 14 auf, der in den schon erwähnten Bund 12 übergeht.

Sind die äußere Hülse 6 und die innere Hülse 7 soweit gegeneinander verschoben, daß der umgeschlagene Abschnitt des Innenschlauches 2 vollständig in dem im Innendurchmesser größeren Abschnitt 9 der äußeren Hülse 6 angeordnet ist, und der Bund 11 der äußeren Hülse 6 von unten an den Bund 12 der inneren Hülse anliegt, kann mit der Verpressung der beiden Hülsen 6, 7 mittels eines hierzu geeigneten Werkzeuges, beispielsweise eines Aufweitdornes begonnen werden. Nach der Verpressung der beiden Hülsen weist die innere Hülse durchgehend einen Innendurchmesser auf, der im wesentlichen dem Innendurchmesser des Innenschlauches 2 entspricht. Dort, wo der Innenschlauch und die Verstärkungsfäden doppelt liegen, also dem freien Ende des Nippels 8 ist der Schlauch so stark komprimiert, daß seine Wandstärke etwa der des einfachen unkomprimierten Schlauches entspricht.

**Patentansprüche**

1. Brauseschlauch mit einem axial verlaufende Verstärkungsfäden (3) aufweisenden Innenschlauch (2) und einem Außenschlauch (5), einer zwischen dem Außenschlauch und dem Innenschlauch angeordneten Verstärkungswendel (4) sowie wenigstens einem Anschlußnippel (8), der zwei konzentrische im Querschnitt jeweils im wesentlichen kreisförmige Hülsen (6, 7) aufweist, zwischen denen ein Schlauchende (1) eingeklemmt ist, dadurch gekennzeichnet, daß der Innenschlauch (2) und die Verstärkungsfäden (3) im anschlußseitigen Nippelbereich länger gehalten sind als der Außenschlauch (5) und die Verstärkungswendel (4) und die über die Verstärkungswendel (4) und den Außenschlauch (5) vorstehenden Bereiche des Innenschlauches (2) und der Verstärkungsfäden (3) nach außen um 180° umgeschlagen und die beiden Hülsen (6, 7) unter Abdichtung zwischen dem umgeschlagenen Innenschlauch (2) und dem Außenschlauch (5) gegeneinander verpreßt sind.

2. Brauseschlauch nach Anspruch 1, dadurch gekennzeichnet, daß die Länge des umgeschlagenen Endes des Innenschlauches (2) und der Verstärkungsfäden (3) mindestens einem Viertel, vorzugsweise einem Drittel bis zu einer Hälfte der Länge des Anschlußnippels (8) entspricht.

3. Brauseschlauch nach Anspruch 1, dadurch gekennzeichnet, daß die äußere Hülse (6) zwei im Innendurchmesser voneinander abweichende trichterförmige ineinander übergehende Abschnitte (9, 10) aufweist, wobei der kleinere Innendurchmesser des Abschnittes (10) im wesentlichen dem Außendurchmesser des Außenschlauches (5) entspricht und wobei die Länge des nach außen umgeschlagenen Bereiches des Innenschlauches (2) und der Verstärkungsfäden (3) im wesentlichen der Länge des Abschnittes (9) mit größerem Innendurchmesser entspricht.

4. Brauseschlauch nach Anspruch 3, dadurch gekennzeichnet, daß die innere Hülse (5) einen Innendurchmesser aufweist, der im wesentlichen dem Innendurchmesser des Innenschlauches (2) entspricht und das Schlauchende mit über die Verstärkungswendel (4) und den Außenschlauch (5) umgeschlagenem und somit doppelt liegendem Innenschlauch (2) so stark komprimiert ist, daß seine Wandstärke etwa der des einfachen unkomprimierten Schlauches entspricht.

**Claims**

1. Shower hose with an axially directed inner hose (2) having reinforcing threads (3) and an outer hose (5), a reinforcing coil (4) arranged between the outer and inner hoses, as well as at least one connecting nipple (8), which has two concentric, cross-sectionally substantially circular sleeves (6, 7) between which is squeezed a hose end (1), characterized in that the inner hose (2) and reinforcing threads (3) are longer in the connection-side nipple area than the outer hose (5) and reinforcing coil (4) and the areas of the inner hose (2) and the reinforcing threads (3) projecting over the reinforcing coil (4) and the outer hose (5) are turned over outwards by 180° and the two sleeves (6, 7) are pressed against one another accompanied by sealing, between the turned over inner hose (2) and the outer hose (5).

2. Shower hose according to claim 1, characterized in that the length of the turned over end of the inner hose (2) and the reinforcing threads (3) is et least a quarter and preferably a third to a half of the length of the connecting nipple (8).

3. Shower hose according to claim 1, characterized in that the outer sleeve (6) has two funnel-shaped portions (9, 10), which pass into one another and have different internal diameters, the smaller internal diameter of portion (10) substantially corresponding to the external diameter of outer hose (5), whilst the length of the outwardly turned over area of inner hose (2) and reinforcing threads (3) substantially corresponds to the length of the portion (9) with the larger internal diameter.

4. Shower hose according to claim 3, characterized in that the inner sleeve (7) has an internal diameter substantially corresponding to the internal diameter of inner hose (2), and the hose end with inner hose (2) turned over to reinforcing coil (4) and outer hose (5) and consequently the present in double form, is compressed to such an extend that its wall thickness approximately corresponds to that of the single uncompressed hose.

**Revendications**

1. Tuyau de douche comportant un tuyau intérieur (2) pourvu de fibres de renforcement (3) s'étendant axialement, et un tuyau extérieur (5), une hélice de renforcement (4) disposée entre le tuyau extérieur et le tuyau intérieur, ainsi qu'au moins un raccord de connexion (8) qui comprens deux douilles (6, 7) ayant chacune une section transversale essentiellement circulaire et qui sont concentriques, entre lesquelles douilles est coincée une extrémité (1) de tuyau, caractérisé en ce que le tuyau intérieur (2) et les fibres de renforcement (3) sont dans la zone du raccord, du côté de la connexion, maintenus à une longueur plus grande que celle du tuyau extérieur (5) et de l'hélice de renforcement (4), et en ce que les parties du tuyau intérieur (2) et des fibres de renforcement (3) apparaissant au-delà de l'hélice de renforcement (4) et du tuyau extérieur (5) sont retournées de 180° vers l'extérieur, les deux douilles (6, 7) étant pressées l'une contre l'autre en assurant l'étanchéité entre le tuyau intérieur retourné (2) et le tuyau extérieur (5).

2. Tuyau de douche selon la revendication 1, caractérisé en ce que la longueur de l'extrémité retournée du tuyau intérieur (2) et des fibres de renforcement (3) correspond à au moins un quart, de préférence de un tiers à la moitié, de la longueur du raccord de connexion (8).

3. Tuyau de douche selon la revendication 1, caractérisé en ce que la douille extérieure (6) comprend deux sections (9, 10) débouchant l'une dans l'autre et dont le diamètre intérieur diminue de l'une à l'autre en entonnoir, le diamètre plus petit de la section (10) correspondant essentiellement au diamètre extérieur du tuyau extérieur (5) et la longueur de la partie retournée vers l'extérieur du tuyau intérieur (2) et des fibres de renforcement (3) correspondant essentiellement à la longueur de la section (9) à plus grand diamètre intérieur.

4. Tuyau de douche selon la revendication 3, caractérisé en ce que la douille intérieure (7) a un diamètre intérieur qui correspond essentiellement au diamètre intérieur du tuyau intérieur (2), et en ce que l'extrémité de tuyau, avec le tuyau intérieur (2) retourné sur l'hélice de renforcement (4) et le tuyau extérieur (5), et ainsi doublé, est si fortement comprimée que son épaisseur de paroi correspond à peu près à celle du tuyau simple non comprimé.

FIG. 1

FIG. 2

**FIG. 3**

**FIG. 4**